# EUROPÄISCHE PATENTSCHRIFT

(11) **EP 2 122 817 B1**
(45) Veröffentlichungstag und Bekanntmachung des Hinweises auf die Patenterteilung: **03.01.2018**
(21) Anmeldenummer: 07702379.4
(22) Anmeldetag: 17.01.2007
(51) Int. Cl.: H02M 1/00, H02M 7/483

(54) **ANSTEUERUNG EINES PHASENMODULZWEIGES EINES MULTILEVEL-STROMRICHTERS**
DRIVE FOR A PHASE MODULE BRANCH OF A MULTILEVEL CONVERTER
ASSERVISSEMENT D'UNE BRANCHE DE MODULE DE PHASE D'UN CONVERTISSEUR À PLUSIEURS NIVEAUX

(43) Veröffentlichungstag der Anmeldung: 25.11.2009
(73) Patentinhaber: Siemens Aktiengesellschaft, 80333 München (DE)
(72) Erfinder: DOMMASCHK, Mike, 01945 Guteborn (DE); DORN, Jörg, 96155 Buttenheim (DE); EULER, Ingo, 91056 Erlangen (DE); LANG, Jörg, 95346 Stadtsteinach (DE); TU, Quoc-Buu, 90574 Rosstal (DE); WÜRFLINGER, Klaus, 90419 Nürnberg (DE)
(86) Internationale Anmeldenummer: PCT/DE2007/000099
(87) Internationale Veröffentlichungsnummer: WO 2008/086760

(56) Entgegenhaltungen:
- EP-A- 1 541 407
- LESNICAR A ET AL: "A new modular voltage source inverter topology"[Online] 2003, XP002454302 Gefunden im Internet: URL:http://www.unibw.de/eit62/forsch/SP/M2 LC/m2lcveroef> [gefunden am 2007-10-10] in der Anmeldung erwähnt

## Beschreibung

Die Erfindung betrifft ein Verfahren zum Auf- und/oder Entladen von Energiespeichern eines Multilevel-Stromrichters mit wenigstens einem Phasenmodulzweig, der eine Reihenschaltung von Submodulen aufweist, die jeweils wenigstens eine Leistungshalbleiterschaltung zum Zu- oder Abschalten eines Energiespeichers in Parallelschaltung zur Leistungshalbleiterschaltung und einen Submodulsensor zum Erfassen eines Energiespeicheristwertes aufweisen, bei dem unter Gewinnung eines Energieänderungszustandes ermittelt wird, ob zugeschaltete Energiespeicher eines Phasenmodulzweiges aufgeladen oder entladen werden können, und der nächste zu schaltende Energiespeicher jedes Phasenmodulzweiges mittels einer vorgegebenen Logik in Abhängigkeit des Energieänderungszustandes ausgewählt wird.
Ein solches Verfahren ist aus einem Beitrag "New Modular Voltage Source Inverter Topology" von A. Lesnicar und R. Marquardt bereits bekannt. Dort ist ein so genannter Multilevel-Stromrichter offenbart und ein Verfahren zu dessen Steuerung. Ein Multilevel-Stromrichter dient beispielsweise zum Antrieb einer elektrischen Maschine oder kann im Bereich der Energieübertragung und -verteilung eingesetzt werden. So ist der Einsatz eines Multilevel-Stromrichters bei der Hochspannungsgleichstromübertragung beschrieben worden, wobei wenigstens zwei Multilevel-Stromrichter gleichspannungsseitig miteinander verbunden sind. Jeder dieser Multilevel-Stromrichter ist wechselspannungsseitig an ein Wechselspannungsnetz angeschlossen, so dass eine Leistungsübertragung zwischen den Wechselspannungsnetzen ermöglicht ist. Dabei weisen die Multilevel-Stromrichter jeweils Phasenmodule auf, deren Anzahl der Anzahl der Phasen des jeweiligen Wechselspannungsnetzes entspricht. Jedes Phasenmodul verfügt über einen Wechselstromanschluss und wenigstens einen Gleichspannungsanschluss. Zwischen dem Wechselspannungsanschluss und jedem Gleichspannungsanschluss erstrecken sich Phasenmodulzweige, die jeweils aus einer Reihenschaltung von Submodulen bestehen. Jedes Submodul verfügt über eine Leistungshalbleiterschaltung, die parallel zu einem Energiespeicher, wie beispielsweise einem Kondensator, angeordnet ist. Je nach Schaltstellung der Leistungshalbleiterschaltung fällt an dem bipolaren Anschluss der Submodule die Spannung des Energiespeichers oder aber die Spannung null ab. Die über den Phasenmodulzweig abfallende Spannung ist somit von der Anzahl der zugeschalteten Submodule abhängig. Phasenmodulzweige der vorgenannten Art sind auch im Zusammenhang mit so genannten "Flexible AC Transmission Systems" denkbar, wobei diese als schnelle Schalter in Reihenschaltung zu einer Spule oder Kondensator beispielsweise zur flexiblen Blindleistungskompensation dienen.

Jede Leistungshalbleiterschaltung weist gemäß dem besagten Beitrag von Lesnicar und Marquardt zwei in Reihe zueinander geschaltete abschaltbare Leistungshalbleiter auf, denen jeweils eine Freilaufdiode antiparallel geschaltet ist. Zur zweckmäßigen Ansteuerung dieser abschaltbaren Leistungshalbleiter ist eine Steuerungseinheit vorgesehen. Eine der Aufgaben der Steuerung besteht darin, die an den Kondensatoren der Submodule abfallenden Spannungen in etwa auf dem gleichen Niveau zu halten. Auf diese Weisen wird eine ungleiche Spannungsbelastung der Submodule oder auch der Phasenmodulzweige vermieden. Zur symmetrischen Spannungsverteilung werden die an den Kondensatoren eines Phasenmodulzweiges abfallenden Spannungen im Kilohertztakt unter Gewinnung von Energiespeicheristwerten erfasst. Anschließend werden die Energiespeicheristwerte hinsichtlich ihrer Größe sortiert. Fließt ein positiver Strom über den Phasenmodulzweig, können die Energiespeicher aufgeladen werden. In diesem Fall wird der Energiespeicher, dem der kleinste Energiespeicheristwert zugeordnet ist, eingeschaltet und somit geladen. Ist der in dem jeweiligen Phasenmodulzweig fließende Strom jedoch negativ, wird der Energiespeicher zugeschaltet, dessen Energiespeicheristwert der größte ist, so dass dieser nach dem Einschalten entladen werden kann. Zunächst werden die zuzuschaltenden und abzuschaltenden Kondensatoren ausgewählt. Anschließend übernimmt eine so genannte Pulsweitenmodulation das eigentliche Zu- und Abschalten der ausgewählten Energiespeicher. Die Energiespeicher werden im Kilohertztakt zu- und abgeschaltet, so dass die an der Summe der zugeschalteten Submodule abfallende Spannung im zeitlichen Mittel einem vorgegebenen Sollwert entspricht. Dem vorbekannten Verfahren haftet der Nachteil an, dass die Leistungshalbleiter der ausgewählten Kondensatoren mit einer hohen Taktrate geschaltet werden. Dies führt zu einer hohen Belastung der Leistungshalbleiterschaltung mit häufigen Ausfällen und aufwändigen Wartungsarbeiten im Gefolge. EP 1 541 407 A1, als ein weiterer Stand der Technik, offenbart ein Verfahren, seriell geschaltete Speicherkondensatoren eines elektrischen Energiespeichers in einem Kraftfahrzeug auf etwa gleichen Niveau zu halten.

Aufgabe der Erfindung ist es, ein Verfahren der eingangs genannten Art bereitzustellen, mit dem die in den Energiespeichern der Submodule eines Multilevel-Stromrichters gespeicherte Energie in etwa auf dem gleichen Niveau gehalten wird, wobei gleichzeitig eine hohe Taktrate beim Zu- und Abschalten des ausgewählten Energiespeichers vermieden ist.
Die Erfindung löst diese Aufgabe dadurch, dass die Summe aller zugeschalteten Energiespeicheristwerte eines Phasenmodulzweiges unter Gewinnung eines Energiespeichersummenistwertes gebildet wird, die Differenz zwischen einem vorgegebenen Phasenmodulzweigenergiesollwert und dem Energiespeichersummenistwert und unter Gewinnung eines Energiedifferenzwertes bestimmt wird und ein Schaltzeitpunkt, in dem der ausgewählte Energiespeicher geschaltet wird, festgelegt wird, wenn der Betrag eines Energiedifferenzwertes oder der Betrag einer aus dem Energiedifferenzwert abgeleiteten Größe den Betrag eines Schaltschwellenwert überschreitet.

Erfindungsgemäß wird ein Schaltzeitpunkt des ausgewählten Energiespeichers gemäß einer zweiten Logik festgelegt. Diese zweite Logik basiert auf einem Vergleich eines von der Steuerung oder einer Ansteuereinheit vorgegebenen Phasenmodulzweigenergiesollwertes mit einem Energiespeichersummenistwert, wobei der Energiespeichersummenistwert die Summe der Energiespeicheristwerte der zugeschalteten Submodule ist. Dabei wird davon ausgegangen, dass nur die zugeschalteten Submodule einen Beitrag beispielsweise zur Spannung liefern können, die in Summe über dem Phasenmodulzweig abfällt. Abgeschaltete Submodule liefern hingegen keinen Beitrag zur besagten Spannung. Das Schalten der Submodule ist erfindungsgemäß auch abhängig von dem Energieänderungszustand. Der Energieänderungszustand wird beispielsweise durch Erfassen eines über den Phasenmodulzweig fließenden Stromes bestimmt. Ist der erfasste Strom positiv, können zugeschalteten Energiespeicher aufgeladen werden. Der Energiespeicheristwert eines abgeschalteten Energiespeichers wird hingegen nicht verändert. Bei einem negativen über den Phasenmodulzweig fließenden Strom, der auch Zweigstrom genannt wird, können zugeschaltete Energiespeicher hingegen entladen werden. Abweichend von der eben dargestellten Zweigstromerfassung kann der Energieänderungszustand auch dadurch bestimmt werden, dass Energiespeicheristwerte eines zugeschalteten Energiespeichers zu zwei verschiedenen Zeitpunkten miteinander verglichen werden. Ist der Energiespeicheristwert einer zeitlich späteren Messung größer als der Energiespeicheristwert, der zuvor gemessen wurde, können die Energiespeicher des Phasenmodulzweiges aufgeladen werden. Im umgekehrten Fall können die zugeschalteten Energiespeicher hingegen nur entladen werden. Die Ermittlung des Energieänderungszustandes ist erfindungsgemäß beliebig.

Durch die Festlegung eines Zeitpunktes mittels einer separaten Logik ist ein häufiges Zu- und Abschalten des ausgewählten Energiespeichers, wie bei der Pulsweitenmodulation, vermieden. Im Rahmen der Erfindung wird lediglich der nächste zu schaltende Energiespeicher ausgewählt und zu einem ermittelten Schaltzeitpunkt geschaltet. Ein häufiges Zu- und Abschalten zum Erhalt eines passenden zeitlichen Mittelwertes ist erfindungsgemäß überflüssig geworden. Das erfindungsgemäße Verfahren sorgt somit zu einer geringeren Belastung der abschaltbaren Leistungshalbleiter.

Vorteilhafterweise ist der nächste zu schaltende Energiespeicher derjenige Energiespeicher, dessen Energiespeicheristwert je nach Energieänderungszustand von einem Energiespeicheristwert des gleichen Phasenmodulzweiges am kleinsten oder am größten ist. Gemäß dieser vorteilhaften Ausgestaltung der Erfindung wird bei einem Energieänderungszustand, in dem die Energiespeicher des Phasenmodulzweiges aufgeladen werden können, derjenige abgeschaltete Energiespeicher zum Einschalten ausgewählt, dessen Energiespeicheristwert am kleinsten ist. Der Energiespeicheristwert gemäß der vorliegenden Erfindung entspricht beispielsweise einer an dem Energiespeicher abfallenden Spannung oder aber einem Quadrat dieser Spannung. Letztendlich dient der Energiespeicheristwert im Rahmen der Erfindung als Maß der in dem jeweils zugeordneten Energiespeicher gespeicherten Energie. Wird von den abgeschalteten Energiespeichern der Energiespeicher mit dem kleinsten Energiespeicheristwert ausgewählt, bedeutet dies, dass derjenige Energiespeicher ausgewählt wird, in dem die geringste Energie gespeichert ist.

Nach der Auswahl des Energiespeichers wird dieser im Schaltzeitpunkt zugeschaltet und somit geladen. Bei einem Energieänderungszustand, in dem die zugeschalteten Energiespeicher des Phasenmodulzweiges entladen werden, wird von den abgeschalteten Energiespeichern der Energiespeicher mit dem größten Energiespeicheristwert zum Zuschalten ausgewählt. Sobald dieser Energiespeicher im Schaltzeitpunkt zugeschaltet wird, wird dieser entladen, so dass der Energiespeicheristwert und somit die in dem Energiespeicher gespeicherte Energie verringert wird. Beim Abschalten wird bei positiven Zweigströmen von den eingeschalteten Energiespeichern der Energiespeicher ausgewählt, der den größten Energiespeicheristwert aufweist. Bei negativen Zweigströmen wird der Energiespeicher zum Abschalten ausgewählt, der den kleinsten Energiespeicheristwert aufweist.

Gemäß einer vorteilhaft Ausgestaltung der Erfindung wird der Schaltschwellenwert durch Multiplikation des Energiespeicheristwertes Uc des nächsten zu schalteten Energiespeichers mit einem vorgegebenen Faktor bestimmt, wobei der Schaltzeitpunkt bestimmt wird, wenn der Betrag des Energiedifferenzwertes größer als der Betrag des Schaltschwellenwertes ist. Gemäß dieser vorteilhaften Weiterentwicklung wird der Energiedifferenzwert mit dem Energiespeicheristwert des nächsten zu schalteten Energiespeichers verglichen. Der Energiedifferenzwert kann positiv oder negativ sein. Übersteigt der Energiespeicheristwert beispielsweise die Hälfte des besagten Energiespeicheristwertes, wird der besagte Energiespeicher durch zweckmäßige Steuersignale an die abschaltbaren Leistungshalbleiter der Leistungshalbleiterschaltung zu- oder abgeschaltet. Ist der Energiedifferenzwert negativ, wird der als nächster abzuschaltende Energiespeicher im Schaltzeitpunkt abgeschaltet. Ist der Energiedifferenzwert positiv wird der nächste zuzuschaltende Energiespeicher im Schaltzeitpunkt zugeschaltet. Nach dem Zu- oder Abschalten wird der nächste zu schaltende Energiespeicher ausgewählt.

Vorteilhafterweise wird der Energiedifferenzwert über die Zeit unter Gewinnung eines Energiedifferenzintegralwertes integriert, wobei der Schaltzeitpunkt als der Zeitpunkt festgelegt wird, in dem der Betrag des Energiedifferenzintegralwertes den Betrag des Schaltschwellenwertes überschreitet. Gemäß dieser vorteilhaften Weiterentwicklung wird der Schaltschwellenwert durch Integration ermittelt. Dies erfordert zwar einen höheren Rechenaufwand, stellt jedoch einen Schaltzeitpunkt bereit, der für eine kleinere Differenz zwischen dem Energiespeichersummenistwert und Halbleitventilenergiesollwert sorgt.

Vorteilhafterweise werden der Energiespeicher eines Phasenmodulzweiges, der den größten Energiespeicherwert aufweist, unter Gewinnung eines Maximalenergieistwertes und der Energiespeicher eines Phasenmodulzweiges, der den kleinsten Energiespeicheristwert aufweist, unter Gewinnung eines Minimalistwertes bestimmt, die Differenz aus dem Maximalenergieistwertes und dem Minimalenergieistwertes unter Gewinnung eines Größtenergieabweichungsistwertes gebildet, der Größtenergieabweichungsistwert mit einem Größtenergieabweichungsschwellenwert verglichen und ein Zusatzschaltzeitpunkt festgelegt, wenn der Größtenergieabweichungsistwert den Größtenergieabweichungsschwellenwert überschreitet, wobei im Zusatzschaltzeitpunkt in Abhängigkeit des Energieänderungszustandes ein Energiespeicher abgeschaltet wird und ein anderer Energiespeicher zugeschaltet wird. Auf diese Weise wird gewährleistet, dass die Differenz zwischen den extremen Energiespeicheristwerten innerhalb eines Phasenmodulzweiges stets nur vorgegebene Werte annehmen kann. Dabei wird der Schaltungstakt oder die Schaltungsfrequenz nicht mehr als unbedingt nötig angehoben.

Bei einer diesbezüglich zweckmäßigen Weiterentwicklung wird bei einem Energieänderungszustand, in dem die Energiespeicher eines Phasenmodulzweiges aufgeladen werden können, im Zusatzschaltzeitpunkt der Energiespeicher abgeschaltet, der von den Energiespeichern eines Phasenmodulzweiges den größten Energiespeicheristwert aufweist, wobei gleichzeitig der Energiespeicher zugeschaltet wird, der von den Energiespeichern des gleichen Phasenmodulzweiges den kleinsten Energiespeicheristwert aufweist.

Gemäß einer weiteren zweckmäßigen Weiterentwicklung wird bei einem Energieänderungszustand, in dem die Energiespeicher eines Phasenmodulzweiges entladen werden können, im Zusatzschaltzeitpunkt der Energiespeicher abgeschaltet, der von den Energiespeichern eines Phasenmodulzweiges den kleinsten Energiespeicheristwert aufweist, wobei gleichzeitig der Energiespeicher zugeschaltet wird, der von den Energiespeichern des gleichen Phasenmodulzweiges den größten Energiespeicheristwert aufweist.

Weitere zweckmäßige Ausgestaltungen und Vorteile der Erfindung sind Gegenstand der nachfolgenden Beschreibung von Ausführungsbeispielen der Erfindung unter Bezug auf die Figur der Zeichnung, wobei gleiche Bezugszeichen auf gleich wirkende Bauteile verweisen und wobei die
- Figur 1: ein Ausführungsbeispiel eines Multilevel-Stomrichters zur Durchführung des erfindungsgemäßen Verfahrens in einer schematischen Darstellung,
- Figur 2: eine Ersatzbilddarstellung eines Submoduls und eines Phasenmodulzweiges des Multilevel-Stromrichters gemäß Figur 1 und
- Figur 3: eine schematische Darstellung zur Verdeutlichung eines Ausführungsbeispiels des erfindungsgemäßen Verfahrens zeigen.

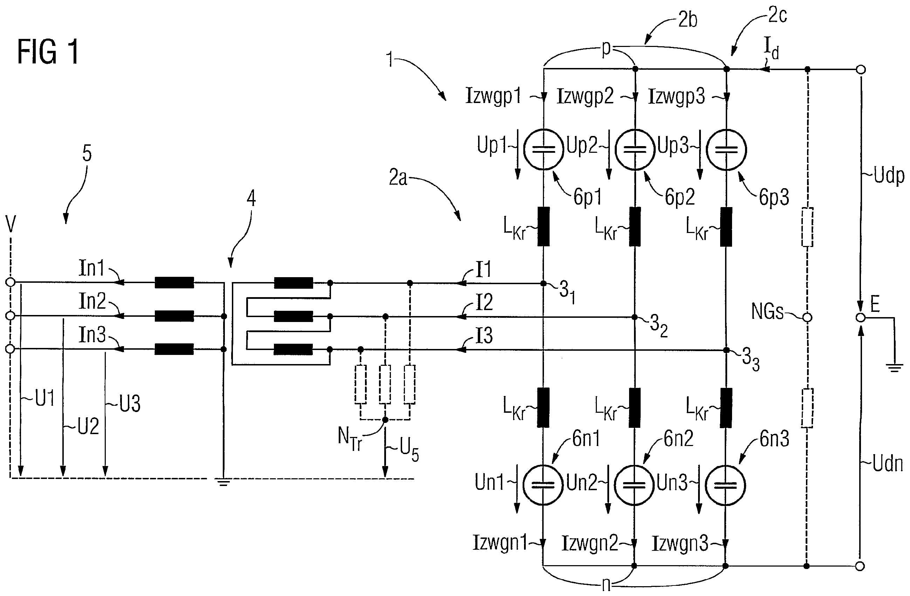

Figur 1 zeigt beispielhaft einen Multilevel-Stromrichter 1, der aus drei Phasenmodulen 2a, 2b und 2c zusammengesetzt ist. Jedes Phasenmodul 2a, 2b und 2c ist mit einer positiven Gleichspannungsleitung p sowie mit einer negativen Gleichspannungsleitung n verbunden, so dass jedes Phasenmodul 2a,2b,2c zwei Gleichspannungsanschlüsse aufweist. Ferner ist für jedes Phasenmodul 2a, 2b und 2c jeweils ein Wechselspannungsanschluss 3₁, 3₂ und 3₃ vorgesehen. Die Wechselspannungsanschlüsse 3₁, 3₂ und 3₃ sind über einen Transformator 4 mit einem dreiphasigen Wechselspannungsnetz 5 verbunden. An den Phasen des Wechselspannungsnetzes 5 fallen die Phasenspannungen U1, U2 und U3 ab, wobei Netzströme In1, In2 und In3 fließen. Der wechselspannungsseitige Phasenstrom eines jeden Phasenmoduls wird mit I1, 12 und I3 bezeichnet. Der Gleichspannungsstrom ist I_{d}. Zwischen jedem der Wechselspannungsanschlüsse 3₁, 3₂ oder 3₃ und der positiven Gleichspannungsleitung p erstrecken sich Phasenmodulzweige 6p1, 6p2 und 6p3. Zwischen jedem Wechselspannungsanschluss 3₁, 3₂, 3₃ und der negativen Gleichspannungsleitung n sind die Phasenmodulzweige 6n1, 6n2 und 6n3 ausgebildet. Jeder Phasenmodulzweig 6p1, 6p2, 6p3, 6n1, 6n2 und 6n3 besteht aus einer Reihenschaltung aus in Figur 1 nicht ausführlich dargestellten Submodulen und einer Induktivität, die in Figur 1 mit L_{Kr} bezeichnet ist.

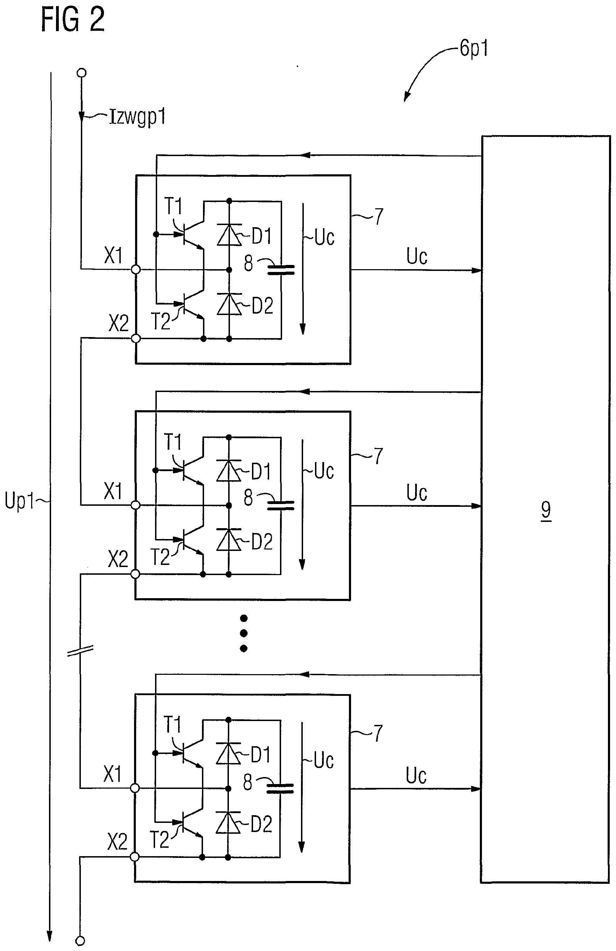

In Figur 2 ist die Reihenschaltung der Submodule 7 und insbesondere der Aufbau der Submodule durch ein elektrisches Ersatzschaltbild genauer dargestellt, wobei in Figur 2 lediglich der Phasenmodulzweig 6p1 herausgegriffen wurde. Die restlichen Phasenmodulzweige sind jedoch identisch aufgebaut. Es ist erkennbar, dass jedes Submodul 7 zwei in Reihe geschaltete abschaltbare Leistungshalbleiter T1 und T2 aufweist. Abschaltbare Leistungshalbleiter sind beispielsweise so genannte IGBTs, GTOs, IGCTs oder dergleichen. Diese sind dem Fachmann als solche bekannt, so dass eine ausführliche Darstellung an dieser Stelle entfallen kann. Jedem abschaltbaren Leistungshalbleiter T1, T2 ist eine Freilaufdiode D1, D2 antiparallel geschaltet. Parallel zur Reihenschaltung der abschaltbaren Leistungshalbleiter T1, T2 beziehungsweise der Freilaufdioden D1 und D2 ist ein Kondensator 8 als Energiespeicher geschaltet. Jeder Kondensator 8 ist unipolar aufgeladen. An den zweipoligen Anschlussklemmen X1 und X2 jedes Submoduls 7 können nunmehr zwei Spannungszustände erzeugt werden. Wird von einer Ansteuereinheit 9 beispielsweise ein Ansteuersignal erzeugt, mit dem der abschaltbare Leistungshalbleiter T2 in seine Durchgangsstellung überführt wird, in der ein Stromfluss über den Leistungshalbleiter T2 ermöglicht ist, fällt an den Klemmen X1, X2 des Submoduls 7 die Spannung null ab. Dabei befindet sich der abschaltbare Leistungshalbleiter T1 in seiner Sperrstellung, in der ein Stromfluss über den abschaltbaren Leistungshalbleiter T1 unterbrochen ist. Dies verhindert das Auf- oder Entladen des Kondensators 8. Wird hingegen der abschaltbare Leistungshalbleiter T1 in seine Durchgangsstellung, der abschaltbare Leistungshalbleiter T2 jedoch in seine Sperrstellung überführt, liegt an den Klemmen X1, X2 des Submoduls 7 die volle Kondensatorspannung Uc an. Der Kondensator 8 kann ferner je nach Richtung des Zweigstromes also in Abhängigkeit des Energieänderungszustandes aufgeladen oder entladen werden.

Jedes Submodul weist ferner einen figürlich nicht dargestellten Submodulsensor zum Erfassen einer an dem jeweiligen Kondensator 8 abfallenden Kondensatorspannung Uc auf, wobei ein der Kondensatorspannung Uc entsprechender Kondensatorspannungswert als Energiespeicheristwert für eine beliebige übergeordnete Regelungseinheit 9 bereitgestellt wird. Die Regelungseinheit 9 sorgt für die zum Schalten der Leistungshalbleiter T1 und T2 notwendigen Steuersignale, wobei das später genauer erläuterte Ausführungsbeispiel des erfindungsgemäßen Verfahrens angewendet wird.

Ein Multi-Level-Stromrichter gemäß der Figuren 1 und 2 ist beispielsweise zum Antrieb elektrischer Maschinen, wie Motoren oder dergleichen, geeignet. Darüber hinaus eignet sich ein solcher Multilevelstromrichter auch für einen Einsatz im Bereich der Energieverteilung und -übertragung. So dient der Multilevel-Stromrichter beispielsweise als Bestandteil einer Kurzkupplung, die aus zwei gleichspannungsseitig miteinander verbundenen Multilevel-Stromrichtern besteht, wobei diese - wie in Figur 1 gezeigt - jeweils mit einem Wechselspannungsnetz verbunden sind. Solche Kurzkupplungen werden zum Energieaustausch zwischen zwei Energieverteilungsnetzen eingesetzt, wobei die Energieverteilungsnetze beispielsweise eine unterschiedliche Frequenz, Phasenlage, Sternpunktbehandlung oder dergleichen aufweisen. Darüber hinaus kommen Anwendungen im Bereich der Blindleistungskompensation, als so genannte FACTS (Flexible AC Transmission Systems) in Betracht. Auch die Hochspannungsgleichstromübertragung über lange Strecken hinweg ist mit solchen Multilevelstromrichtern denkbar. Aufgrund der Fülle der unterschiedlichen Anwendungsmöglichkeiten ergeben sich viele unterschiedliche Betriebsspannungen, an welche die jeweilige erfindungsgemäße Vorrichtung anzupassen ist. Aus diesem Grunde kann die Anzahl der Submodule von einigen wenigen bis hin zu mehreren hundert Submodulen 7 variieren.

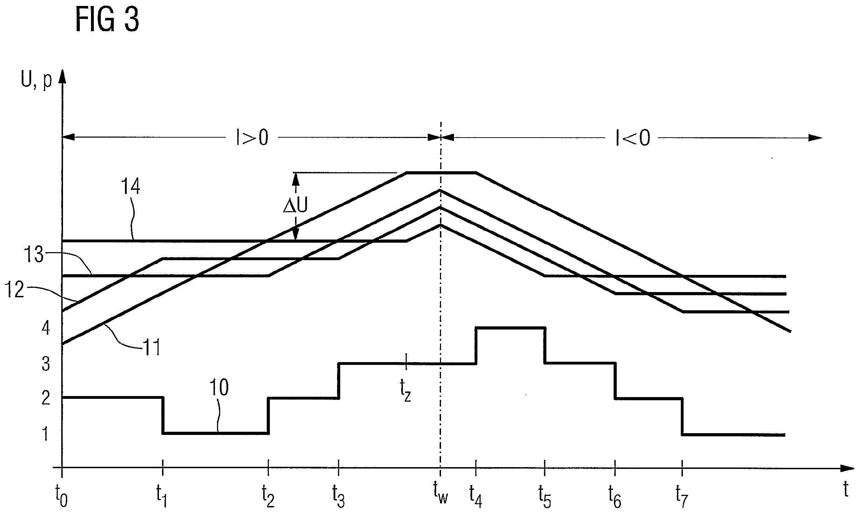

Figur 3 verdeutlicht ein Ausführungsbeispiel des erfindungsgemäßen Verfahrens mit Hilfe eines Diagramms, wobei das besagte Verfahren beispielsweise von einem Multilevel-Stromrichter 1 gemäß der Figuren 1 und 2 durchgeführt wird. In dem in Figur 3 gezeigten Diagramm ist auf der Abszisse die Zeit abgetragen, während auf der Ordinate im unteren Bereich mit 1, 2, 3, 4 die Anzahl der insgesamt vier zählenden Energiespeicher aufgetragen ist. Es sei darauf hingewiesen, dass jedes Submodul 7 einen Energiespeicher aufweist, der hier ein Kondensator ist, wobei auf die Kondensatoren im Allgemeinen mit dem Bezugszeichen 8 verwiesen wird. Die untere Kurve 10 verdeutlicht somit die Anzahl p der zugeschalteten Kondensatoren 8 in Abhängigkeit der Zeit.

Oberhalb der Kurve 10 ist die Spannung Uc als Funktion der Zeit aufgetragen, die an den vier Kondensatoren 8 jeweils abfällt. Bis zu einem mit tw bezeichneten Zeitpunkt ist der über den Phasenmodulzweig fließende Strom Izwgp1 größer als null. Dies bedeutet, dass bis zum Zeitpunkt tw die Kondensatoren 8 der Submodule 7 jeweils aufgeladen werden können. In dem sich an den Zeitpunkt tw anschließenden Zeitraum können die jeweiligen Kondensatoren 8 hingegen nur entladen werden, wenn diese mittels der ihnen parallel geschalteten Leistungshalbleiterschaltung zugeschaltet werden.

In der Figur 3 sind beispielhaft die Kondensatorspannungen Uc der vier Kondensatoren 11, 12, 13 und 14 des Phasenmodulzweiges 6p1 in Abhängigkeit der Zeit t aufgetragen. Im Zeitpunkt tw sind gemäß dem Kurvenverlauf 10 zwei Kondensatoren zugeschaltet, nämlich die Kondensatoren 11 und 12. Da der über den Phasenmodulzweig 6p1 fließende Strom I größer als null ist, steigt die an ihnen abfallende Spannung Uc und somit der von den Submodulsensoren erfasste Energiespeicheristwert linear an. Als nächster abzuschaltender Kondensator wird der Kondensator 12 ausgewählt, da die an ihm abfallende Spannung größer ist als diejenige des Kondensators 11. Die Kondensatoren 13 und 14 sind bereits abgeschaltet und können daher nicht als nächste abzuschaltende Kondensatoren ausgewählt werden. Die Regelungseinheit 9 verfügt über einen Phasenmodulzweigenergiesollwert, der sich über die Zeit hinweg ändert. In dem Zeitintervall zwischen t0 und t1 wird der Phasenmodulzweigenergiesollwert fortwährend kleiner. Im Zeitpunkt t1 ist der Betrag der Differenz zwischen dem Phasenmodulzweigenergiesollwert und einem Energiespeichersummenistwert, der aus Summe der Kondensatorspannungen Uc der Kondensatoren 11 und 12 gebildet wird, kleiner als die Hälfte der Kondensatorspannung des nächsten abzuschaltenden Kondensators 12, so dass ein Schaltzeitpunkt festgelegt wird, in dem der Kondensator 12 abgeschaltet wird. Nunmehr ist nur noch der Kondensator 11 zugeschaltet. Der Spannungsverlauf der Kondensatoren 12, 13 und 14 weist die Steigung null auf. Die Kondensatoren 12, 13 und 14 werden nicht mehr geladen.

Der zeitliche Verlauf des Phasenmodulzweigsollwertes ist sinusförmig. Im Zeitintervall zwischen t1 und t2 erreicht der Halbleiterenergiesollwert sein Minimum und steigt anschließend wieder an. Um diesem vorgegebenen Kurvenverlauf zu folgen, müssen bislang abgeschaltete Kondensatoren von der Regelungseinheit zugeschaltet werden. Der Zweigstrom Izwg1 ist positiv. Als nächster zuzuschaltender Kondensator wird daher der Kondensator 13 ausgewählt, an dem geringste Spannung abfällt, so dass dieser aufgeladen werden kann und das Spannungsniveau der andern Kondensatoren erreicht. Im Schaltzeitpunkt t2 ist der Betrag der Differenz aus Phasenmodulzweigenergiesollwert und Energiespeichersummenistwert, der in diesem Fall gleich der Kondensatorspannung Uc des einzigen zugeschalteten Kondensators 11 ist, größer als der Betrag des Schaltschwellenwertes, der wieder aus der Multiplikation der Kondensatorspannung des zu schaltenden Kondensators - hier Kondensator 13 - mit dem Faktor ½ gebildet wird. Nunmehr werden die Kondensatoren 11 und 13 geladen.

Die Kondensatorspannung des Kondensators 13 übersteigt schließlich die Kondensatorspannung des Kondensators 12, so dass der Kondensator 12 als nächster zuzuschaltender Kondensator ausgewählt wird. Die Summe der Kondensatorspannungen der Kondensatoren 11 und 13 ist nunmehr der Energiespeichersummenistwert. Im Schaltzeitpunkt t3 ist der Betrag der Differenz aus Phasenmodulzweigenergiesollwert und Energiespeichersummenistwert, also die Summe der Kondensatorspannungen der Kondensatoren 11 und 13, größer als die Hälfte der an dem Kondensator 12 abfallenden Kondensatorspannung, so dass nunmehr auch der Kondensator 12 zugeschaltet wird.

Im Zusatzschaltzeitpunkt tz ist die Spannungsdifferenz ΔU zwischen der kleinsten Kondensatorspannung, die an dem Kondensator 14 abfällt und der größten Kondensatorspannung, die an dem Kondensator 11 abfällt, größer als ein von der Steuereinheit vorgegebener Größtenergieabweichungsschwellenwert. Aus diesem Grunde schaltet die Regelungseinheit 9 den Kondensator 11, an dem die größte Kondensatorspannung Uc abfällt, ab und im gleichen Zeitpunkt den Kondensator 14, an dem im Zeitpunkt tz die kleinste Kondensatorspannung abfällt, zu. Durch diese Maßnahme wird sichergestellt, dass die Kondensatorspannungen Uc der Kondensatoren eines Phasenmodulzweiges keine stark unterschiedlichen Werte annehmen. Dies hätte eine ungleiche Spannungsbelastung und somit eine Beschädigung der Submodule 7 zur Folge.

Im Zeitpunkt tw wird der über den Phasenmodulzweig fließende Zweigstrom, der in Figur 3 aus Gründen der Übersicht nur mit I bezeichnet ist, negativ. Die zugeschalteten Kondensatoren 12, 13 und 14 werden daher entladen. Als nächster zuzuschaltender Kondensator wird zwangsläufig der einzige abgeschaltete Kondensator 11 ausgewählt. Im Zeitpunkt t4 ist die Differenz zwischen Halbleiterenergiesollwert und Energiespeichersummenistwert, der aus der Summe der an den Kondensatoren 12, 13 und 14 abfallenden Kondensatorspannungen gebildet wird, größer als die Hälfte der Kondensatorspannung Uc des Kondensators 11, so dass es zum Zuschalten des Kondensators 11 kommt. Alle Kondensatoren werden nunmehr entladen.

Im Zeitintervall zwischen t4 und t5 durchläuft der vorgegebene Phasenmodulzweigenergiesollwert ein Maximum und wird anschließend wieder kleiner, so dass Kondensatoren 8 aus der Reihendschaltung der Submodule 7 des Phasenmodulzweiges 6p1 abgeschaltet werden müssen. Als nächster abzuschaltender Kondensator wird der Kondensator 14 ausgewählt, da an diesem die kleinste Spannung abfällt und in dem somit die geringste Energie gespeichert ist. Die Steuerung sorgt nunmehr für einen abnehmenden Halbleiterenergiesollwert. Im Zeitpunkt t5 ist die Differenz aus Halbleiterenergiesollwert und Energiespeichersummenwert negativ und kleiner als ein negativer Energiedifferenzwert. Es kommt zum Abschalten des Kondensators 14. Entsprechend wird zu den Schaltzeitpunkten t6 und t7 verfahren.

## Patentansprüche

1. Verfahren zum Auf- und/oder Entladen von Energiespeichern eines Multilevel-Stromrichters (1) mit wenigstens einem Phasenmodulzweig (6p1, 6p2, 6p3, 6n1, 6n2, 6n3), der eine Reihenschaltung von Submodulen (7) aufweist, die jeweils wenigstens eine Leistungshalbleiterschaltung zum Zu- oder Abschalten eines Energiespeichers (8) in Parallelschaltung zur Leistungshalbleiterschaltung (T1, T2) und einen Submodulsensor zum Erfassen eines Energiespeicheristwertes Uc aufweisen, bei dem
- unter Gewinnung eines Energieänderungszustandes ermittelt wird, ob zugeschaltete Energiespeicher (8) eines Phasenmodulzweiges (6p1, 6p2, 6p3, 6n1, 6n2, 6n3) aufgeladen oder entladen werden können,
- und der nächste zu schaltende Energiespeicher (8) jedes Phasenmodulzweiges mittels einer vorgegebenen Logik in Abhängigkeit des Energieänderungszustandes ausgewählt wird,
**dadurch gekennzeichnet, dass** die Summe aller zugeschalteten Energiespeicheristwerte unter Gewinnung eines Energiespeichersummenistwertes gebildet wird, die Differenz zwischen einem vorgegebenen Phasenmodulzweigenergiesollwert und dem Energiespeichersummenistwert unter Gewinnung eines Energiedifferenzwertes bestimmt wird und ein Schaltzeitpunkt, in dem der ausgewählte Energiespeicher geschaltet wird, festgelegt wird, wenn der Betrag des Energiedifferenzwertes oder der Betrag einer aus dem Energiedifferenzwert abgeleiteten Größe den Betrag eines Schaltschwellenwertes überschreitet.

2. Verfahren nach Anspruch 1,
**dadurch gekennzeichnet, dass** der nächste zu schaltende Energiespeicher (8) derjenige Energiespeicher ist, dessen Energiespeicheristwert je nach Energieänderungszustand von allen Energiespeicheristwerten des gleichen Phasenmodulzweiges (6p1, 6p2, 6p3, 6n1, 6n2, 6n3) am kleinsten oder am größten ist.

3. Verfahren nach Anspruch 1 oder 2,
**dadurch gekennzeichnet, dass**
der Schaltschwellenwert durch Multiplikation des Energiespeicheristwertes Uc des nächsten zu schaltenden Energiespeichers (8) mit einem vorgegebenen Faktor bestimmt wird, wobei der Schaltzeitpunkt bestimmt wird, wenn der Betrag des Energiedifferenzwertes größer als der Betrag des Schaltschwellenwertes ist.

4. Verfahren nach Anspruch 1 oder 2,
**dadurch gekennzeichnet, dass**
der Energiedifferenzwert über die Zeit unter Gewinnung eines Energiedifferenzintegralwertes integriert wird, wobei der Schaltzeitpunkt als der Zeitpunkt festgelegt wird, in dem der Energiedifferenzintegralwert je nach Energieänderungszustand den positiven Schaltschellenwert D überschreitet oder den negativen Schaltschwellenwert -D unterschreitet.

5. Verfahren nach einem der vorhergehenden Ansprüche,
**dadurch gekennzeichnet, dass**
der Energiespeicher (8) eines Phasenmodulzweiges (6p1, 6p2, 6p3, 6n1, 6n2, 6n3), der den größten Energiespeicheristwert aufweist, unter Gewinnung eines Maximalenergieistwertes und der Energiespeicher (8) eines Phasenmodulzweiges, der den kleinsten Energiespeicheristwert aufweist, unter Gewinnung eines Minimalenergieistwertes bestimmt werden, die Differenz aus dem Maximalenergieistwertes und dem Minimalenergieistwertes unter Gewinnung eines Größtenergieabweichungsistwertes gebildet wird, der Größtenergieabweichungsistwert mit einem Größtenergieabweichungsschwellenwert verglichen wird, und ein Zusatzschaltzeitpunkt festgelegt wird, wenn der Größtenergieabweichungsistwert den Größtenergieschwellenwert überschreitet, wobei im Zusatzschaltzeitpunkt in Abhängigkeit des Energieänderungszustandes ein Energiespeicher abgeschaltet und ein anderer Energiespeicher zugeschaltet wird.

6. Verfahren nach Anspruch 5,
**dadurch gekennzeichnet, dass** bei einem Energieänderungszustand, in dem die Energiespeicher (8) eines Phasenmodulzweiges (6p1, 6p2, 6p3, 6n1, 6n2, 6n3) aufgeladen werden können, im Zusatzschaltzeitpunkt der Energiespeicher abgeschaltet wird, der von den Energiespeichern eines Phasenmodulzweiges den größten Energiespeicheristwert aufweist, wobei gleichzeitig der Energiespeicher zugeschaltet wird, der von den Energiespeichern des gleichen Phasenmodulzweiges den kleinsten Energiespeicheristwert aufweist.

7. Verfahren nach Anspruch 5,
**dadurch gekennzeichnet, dass** bei einem Energieänderungszustand, in dem die Energiespeicher (8) eines Phasenmodulzweiges (6p1, 6p2, 6p3, 6n1, 6n2, 6n3) entladen werden können, im Zusatzschaltzeitpunkt der Energiespeicher abgeschaltet wird, der von den Energiespeichern eines Phasenmodulzweiges den kleinsten Energiespeicheristwert aufweist, wobei gleichzeitig der Energiespeicher zugeschaltet wird, der von den Energiespeichern des gleichen Phasenmodulzweiges den größten Energiespeicheristwert aufweist.

## Claims

1. Method for charging and/or discharging energy stores of a multilevel converter (1) comprising at least one phase module branch (6p1, 6p2, 6p3, 6n1, 6n2, 6n3) having a series circuit formed by submodules (7), which each have at least one power semiconductor circuit for turning on or off an energy store (8) connected in parallel with the power semiconductor circuit (T1, T2) and a submodule sensor for detecting an energy store actual value Uc, wherein
- with an energy change state being obtained a determination is made as to whether turned-on energy stores (8) of a phase module branch (6p1, 6p2, 6p3, 6n1, 6n2, 6n3) can be charged or discharged,
- and the next energy store (8) to be switched in each phase module branch is selected by means of a predetermined logic in a manner dependent on the energy change state,
**characterized in that**
the sum of all the turned-on energy store actual values is formed with an energy store summation actual value being obtained, the difference between a predetermined phase module branch energy desired value and the energy store summation actual value is determined with an energy difference value being obtained, and a switching instant at which the selected energy store is switched is defined if the magnitude of the energy difference value or the magnitude of a quantity derived from the energy difference value exceeds the magnitude of a switching threshold value.

2. Method according to Claim 1,
**characterized in that**
the next energy store (8) to be switched is that energy store whose energy store actual value is the smallest or largest depending on the energy change state of all the energy store actual values of the same phase module branch (6p1, 6p2, 6p3, 6n1, 6n2, 6n3).

3. Method according to Claim 1 or 2,
**characterized in that**
the switching threshold value is determined by multiplication of the energy store actual value Uc of the next energy store (8) to be switched by a predetermined factor, wherein the switching instant is determined if the magnitude of the energy difference value is greater than the magnitude of the switching threshold value.

4. Method according to Claim 1 or 2,
**characterized in that**
the energy difference value is integrated over time with an energy difference integral value being obtained, wherein the switching instant is defined as the instant at which the energy difference integral value exceeds the positive switching threshold value D or falls below the negative switching threshold value -D depending on the energy change state.

5. Method according to any of the preceding claims,
**characterized in that**
the energy store (8) of a phase module branch (6p1, 6p2, 6p3, 6n1, 6n2, 6n3) which has the largest energy store actual value is determined with a maximum energy actual value being obtained, and the energy store (8) of a phase module branch which has the smallest energy store actual value is determined with a minimum energy actual value being obtained, the difference between the maximum energy actual value and the minimum energy actual value is formed with a largest energy deviation actual value being formed, the largest energy deviation actual value is compared with a largest energy deviation threshold value, and an additional switching instant is defined if the largest energy deviation actual value exceeds the largest energy threshold value, wherein, at the additional switching instant, in a manner dependent on the energy change state, one energy store is turned off and another energy store is turned on.

6. Method according to Claim 5,
**characterized in that**
in the case of an energy change state in which the energy stores (8) of a phase module branch (6p1, 6p2, 6p3, 6n1, 6n2, 6n3) can be charged, at the additional switching instant the energy store which has the largest energy store actual value from among the energy stores of a phase module branch is turned off, wherein the energy store which has the smallest energy store actual value from among the energy stores of the same phase module branch is simultaneously turned on.

7. Method according to Claim 5,
**characterized in that**
in the case of an energy change state in which the energy stores (8) of a phase module branch (6p1, 6p2, 6p3, 6n1, 6n2, 6n3) can be discharged, at the additional switching instant the energy store which has the smallest energy store actual value from among the energy stores of a phase module branch is turned off, wherein the energy store which has the largest energy store actual value from among the energy stores of the same phase module branch is simultaneously turned on.

## Revendications

1. Procédé de charge et de décharge d'accumulateurs d'énergies d'un convertisseur (1) à plusieurs niveaux,
comprenant au moins une branche (6p1, 6p2, 6p3, 6n1, 6n2, 6n3) de module de phase, qui a un circuit série de sous-modules (7),
qui ont chacun au moins un circuit à semi-conducteur de puissance pour connecter ou déconnecter un accumulateur (8) d'énergie en circuit parallèle avec le circuit (T1, T2) à semi-conducteur de puissance et un capteur de sous-module pour détecter une valeur U_{c} réelle d'accumulateur d'énergie,
dans lequel
- en obtenant un état de changement de l'énergie, on détermine si des accumulateurs (8) d'énergie connectés d'une branche (6p1, 6p2, 6p3, 6n1, 6n2, 6n3) de module de phase peuvent être chargés ou déchargés,
- et on choisit l'accumulateur (8) d'énergie suivant à connecter de chaque branche de module de phase au moyen d'une logique donnée à l'avance en fonction de l'état de changement d'énergie,
**caractérisé en ce que**
on forme la somme de toutes les valeurs réelles d'accumulateur d'énergie connectés en obtenant une valeur réelle somme d'accumulateur d'énergie, on détermine la différence entre une valeur de consigne d'énergie de branche de module de phase donnée à l'avance et la valeur réelle somme d'accumulateur d'énergie en obtenant une valeur de différence d'énergie et on fixe un instant de connexion où l'accumulateur d'énergie choisi est connecté, si la valeur absolue de la valeur de différence d'énergie ou la valeur absolue d'une grandeur déduite de la valeur de différence d'énergie dépasse la valeur absolue d'une valeur de seuil de connexion.

2. Procédé suivant la revendication 1,
**caractérisé en ce que**
l'accumulateur (8) d'énergie suivant à connecter est l'accumulateur d'énergie, dont la valeur réelle d'accumulateur d'énergie est suivant l'état de changement d'énergie, parmi toutes les valeurs réelles d'accumulateur d'énergie de la même branche (6p1, 6p2, 6p3, 6n1, 6n2, 6n3) de module de phase la plus petite ou la plus grande.

3. Procédé suivant la revendication 1 ou 2,
**caractérisé en ce que**
l'on détermine la valeur de seuil de connexion en multipliant la valeur U_{c} réelle d'accumulateur d'énergie de l'accumulateur (8) d'énergie suivant à connecter par un facteur donné à l'avance, l'instant de connexion étant déterminé lorsque la valeur absolue de la valeur de différence d'énergie est plus grande que la valeur absolue de la valeur de seuil de connexion.

4. Procédé suivant la revendication 1 ou 2,
**caractérisé en ce que**
l'on intègre la valeur de différence d'énergie en fonction du temps en obtenant une valeur intégrale de différence d'énergie, l'instant de connexion étant fixé comme étant l'instant où la valeur intégrale de différence d'énergie suivant l'état de changement d'énergie, dépasse la valeur D de seuil positive de connexion ou est inférieure à la valeur -D de seuil négative de connexion.

5. Procédé suivant l'une des revendications précédentes,
**caractérisé en ce que**
l'on détermine l'accumulateur (8) d'énergie d'une branche (6p1, 6p2, 6p3, 6n1, 6n2, 6n3) de module de phase, qui a la valeur réelle d'accumulateur d'énergie la plus grande, en obtenant une valeur réelle d'énergie maximum, et l'accumulateur (8) d'énergie d'une branche d'un module de phase, qui a la valeur réelle d'accumulateur d'énergie la plus petite, en obtenant une valeur réelle d'énergie minimum, on forme la différence entre la valeur réelle d'énergie maximum et la valeur réelle d'énergie minimum, en obtenant une valeur réelle d'écart d'énergie la plus grande, on compare la valeur réelle d'écart d'énergie la plus grande à une valeur de seuil d'écart d'énergie la plus grande et on fixe un instant de connexion supplémentaire, si la valeur réelle d'écart d'énergie la plus grande dépasse la valeur de seuil d'énergie la plus grande, dans lequel, à l'instant de connexion supplémentaire, en fonction de l'état de changement d'énergie, on déconnecte un accumulateur d'énergie et on connecte un autre accumulateur d'énergie.

6. Procédé suivant la revendication 5,
**caractérisé en ce que**
pour un état de changement d'énergie, dans lequel les accumulateurs (8) d'énergie d'une branche (6p1, 6p2, 6p3, 6n1, 6n2, 6n3) de module de phase peuvent être chargés, on déconnecte à l'instant de connexion supplémentaire l'accumulateur d'énergie, qui, parmi les accumulateurs d'énergie d'une branche de module de phase, a la valeur réelle d'accumulateur d'énergie la plus grande, tandis que, en même temps, on connecte l'accumulateur d'énergie, qui, parmi les accumulateurs d'énergie de la même branche de module de phase, a la valeur réelle d'accumulateur d'énergie la plus petite.

7. Procédé suivant la revendication 5,
**caractérisé en ce que**
pour un état de changement d'état, dans lequel les accumulateurs (8) d'énergie d'une branche (6p1, 6p2, 6p3, 6n1, 6n2, 6n3) de module de phase peuvent être déchargés, on déconnecte, à l'instant de connexion des accumulateurs d'énergie, celui des accumulateurs d'énergie d'une branche de module de phase, qui a la valeur réelle d'accumulateur d'énergie la plus petite, tandis que, en même temps, on connecte l'accumulateur d'énergie, qui, parmi les accumulateurs d'énergie de la même branche de module de phase, a la valeur réelle d'accumulateur d'énergie la plus grande.
